(19) **Europäisches Patentamt / European Patent Office / Office européen des brevets**

(11) **EP 4 668 557 A1**

(12) # EUROPEAN PATENT APPLICATION

(43) Date of publication:
24.12.2025 Bulletin 2025/52

(21) Application number: 24182558.7

(22) Date of filing: 17.06.2024

(51) International Patent Classification (IPC):
H02M 1/00 (2006.01)  H02M 3/00 (2006.01)
H02M 3/28 (2006.01)  H02M 3/335 (2006.01)

(52) Cooperative Patent Classification (CPC):
H02M 1/0067; H02M 1/0077; H02M 3/158;
H02M 3/335; H02M 3/01

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH MA MD TN

(71) Applicant: ABB Schweiz AG
5400 Baden (CH)

(72) Inventors:
• **Boehler, Julian**
  **8006 Zürich (CH)**
• **Pettersson, Sami**
  **8953 Dietikon (CH)**
• **Canales, Francisco**
  **5405 Baden-Dättwil (CH)**

(74) Representative: **Sykora & König Patentanwälte PartG mbB**
**Maximilianstraße 2**
**80539 München (DE)**

(54) **METHOD, CONTROLLER, AND COMPUTER PROGRAM FOR OPERATING A CONVERTER ARRANGEMENT, CONVERTER ARRANGEMENT, AND COMPUTER-READABLE MEDIUM**

(57) A method for operating a converter arrangement (20) is described. The converter arrangement (20) is configured for converting a first DC bus voltage into a second DC bus voltage and comprises a first electrical converter (22) and a second electrical converter (24) being electrically arranged in parallel to the first electrical converter (22), and each being configured for converting a first DC voltage (V1) into a second DC voltage (V2), and a first auxiliary converter (30) electrically arranged in series with the first electrical converter (22) and a second auxiliary converter (32) electrically arranged in series with the second electrical converter (24). The method comprises: receiving a first current value (I1) being representative of a first current through the first electrical converter (22); receiving a second current value (I2) being representative of a second current through the second electrical converter (24); determining a first difference between the first and second current values (I1, I2); determining a first compensation voltage value (VC1) depending on the first difference such that the first current corresponds to the second current when a first compensation voltage corresponding to the first compensation voltage value (VC1) is added by the first auxiliary converter (30) to the first DC bus voltage applied to the first electrical converter (22) or when the first compensation voltage is added to a first output voltage generated by the first electrical converter (22); determining a second compensation voltage value (VC2) depending on the first difference such that the first current corresponds to the second current when a second compensation voltage corresponding to the second compensation voltage value (VC2) is added by the second auxiliary converter (32) to the first DC bus voltage applied to the second electrical converter (24) or when the first compensation voltage is added to a second output voltage generated by the second electrical converter (24); sending a first compensation signal to the first auxiliary converter (30), wherein the first auxiliary converter (30) is configured to add the first compensation voltage to the first DC bus voltage applied to the first electrical converter (22) or, respectively, to the first output voltage generated by the first electrical converter (22) upon receiving the first compensation signal; and sending a second compensation signal to the second auxiliary converter (32), wherein the second auxiliary converter (32) is configured to add the second compensation voltage to the first DC bus voltage applied to the second electrical converter (24) or, respectively, to the second output voltage generated by the second electrical converter (24) upon receiving the second compensation signal.

EP 4 668 557 A1

**FIG. 1**

**EP 4 668 557 A1**

**Description**

FIELD OF THE INVENTION

The invention relates to the field of electrical DC/DC converters. In particular, the invention relates to a method, a controller, and a computer program for operating a converter arrangement, to the converter arrangement, and to a computer-readable medium on which the computer program is stored.

BACKGROUND OF THE INVENTION

Electrical DC/DC converters are configured for converting a first DC voltage as an input voltage into a second DC voltage as an output voltage. The electrical converters may be coupled to an energy source, such as a battery or a photovoltaic panel, with the energy source providing the first DC voltage, and to a DC load, such as a DC motor, for example, to apply the second DC voltage to the load. For example, an LLC resonant converter, in short "LLC converter", dual-active bridge converter, forward converter, and flyback converter are well-known and widely established converter topology used in different industrial applications.

Normally, LLC converters have an input stage with a full-bridge and an output stage with a full-bridge inductively coupled to each other by a transformer, e.g., a primary winding and a secondary winding. They may be turned on and off at zero voltage which may lead to low or even no switching losses and/or enable high switching frequencies. Further, LLCs may be operated with fixed modulation parameters and thereby in a simple way. LLC converters are usually controlled by adapting their switching frequency in order to guarantee a stabilized output voltage. In some applications however, a stabilized output voltage is not necessarily required. The LLC converter can then be operated open-loop with a fixed switching frequency slightly below a resonance frequency of the corresponding LLC converter, e.g., in a half-cycle discontinuous conduction mode, and provide a fixed ratio between the input voltage and the output voltage. This operating mode simplifies a converter operation since no closed-loop control is required and is often desirable since it enables fully soft-switched operation.

In order to increase an available output power, in particular an output current, of an electrical converter, e.g., the LLC converter, it is often desirable to parallel connect several identical converters. For example, several LLCs may be electrically arranged in parallel to increase the available total output current and thereby to increase the available total output power. However, if the electrical converters are operated in open-loop with fixed modulation parameters, the currents are distributed passively over the different paralleled LLCs and there is no possibility to influence a distribution of currents provided to the load between different paralleled LLC converters. The distribution of the currents is then solely determined by electric and/or thermal losses and by parasitic elements of the electrical converters, which may deviate significantly between different electrical converters. As a consequence, equal loading of the paralleled electrical converters cannot be guaranteed and large deviations may occur, thereby significantly reducing the available output power and/or overloading some of the paralleled electrical converters.

DESCRIPTION OF THE INVENTION

It is an objective of the present invention to provide a method, a controller, and a computer program for operating a converter arrangement, which enable to provide a high output power by the converter arrangement and/or to prevent an overloading of one or more electrical converters of the converter arrangement. It is another objective of the present invention to provide a computer-readable medium on which the computer program is stored.

It is a further objective of the present invention to provide a converter arrangement, which is able to provide a high output power and/or in which an overloading of one or more electrical converters of the converter arrangement is prevented or at least aggravated.

These objectives are achieved by the subject-matter of the independent claims. Further exemplary embodiments are evident from the dependent claims and the following description.

A first aspect relates to a method for operating a converter arrangement. The converter arrangement is configured for converting a first DC bus voltage into a second DC bus voltage and comprises a first electrical converter, a second electrical converter being electrically arranged in parallel to the first electrical converter, a first auxiliary converter electrically arranged in series with the first electrical converter, and a second auxiliary converter electrically arranged in series with the second electrical converter. The method comprises: receiving a first current value being representative of a first current through the first electrical converter; receiving a second current value being representative of a second current through the second electrical converter; determining a first difference between the first and second current values; determining a first compensation voltage value depending on the first difference such that the first current corresponds to the second current when a first compensation voltage corresponding to the first compensation voltage value is added by the first auxiliary converter to the first DC bus voltage applied to the first electrical converter or when the first compensation

3

voltage is added to a first output voltage generated by the first electrical converter; determining a second compensation voltage value depending on the first difference such that the first current corresponds to the second current when a second compensation voltage corresponding to the second compensation voltage value is added by the second auxiliary converter to the first DC bus voltage applied to the second electrical converter or when the first compensation voltage is added to a second output voltage generated by the second electrical converter; sending a first compensation signal to the first auxiliary converter, wherein the first auxiliary converter is configured to add the first compensation voltage to the first DC bus voltage applied to the first electrical converter or, respectively, to the first output voltage generated by the first electrical converter upon receiving the first compensation signal; and sending a second compensation signal to the second auxiliary converter, wherein the second auxiliary converter is configured to add the second compensation voltage to the first DC bus voltage applied to the second electrical converter or, respectively, to the second output voltage generated by the second electrical converter upon receiving the second compensation signal.

In particular, when the first compensation voltage is added by the first auxiliary converter to the first DC bus voltage applied to the first electrical converter, the first auxiliary converter is configured to add the first compensation voltage to the first DC bus voltage applied to the first electrical converter upon receiving the first compensation signal. When the first compensation voltage is added to the first output voltage generated by the first electrical converter, the first auxiliary converter is configured to add the first compensation voltage to the first output voltage generated by the first electrical converter upon receiving the first compensation signal. When the second compensation voltage is added by the second auxiliary converter to the first DC bus voltage applied to the second electrical converter, the second auxiliary converter is configured to add the second compensation voltage to the first DC bus voltage applied to the second electrical converter upon receiving the second compensation signal. When the second compensation voltage is added to the second output voltage generated by the second electrical converter, the second auxiliary converter is configured to add the second compensation voltage to the second output voltage generated by the second electrical converter upon receiving the second compensation signal.

A second aspect relates to a controller for operating the converter arrangement. The controller comprises: a memory for storing one or more current values and/or one or more voltage values; and a processor communicatively coupled to the memory and being configured for carrying out the method as described above and in the following based on the one or more current values and/or one or more voltage values, respectively. The one or more current values may be at least one of the first current value, the second current value, and the difference between the first and second current values. The one or more voltage values may be at least one of the first compensation voltage, the second compensation voltage, the first DC voltage, and the second DC voltage.

A third aspect relates to the converter arrangement for converting the first DC bus voltage into the second DC bus voltage. The converter arrangement comprises: an input connection for electrically coupling the converter arrangement to an energy source, wherein the energy source is configured for providing the first DC bus voltage; an output connection for electrically coupling the converter arrangement to a load, wherein the load is configured for receiving the second DC bus voltage; the first electrical converter electrically coupled in between the input connection and the output connection and being configured for receiving the first DC voltage, for converting the first DC bus voltage into the second DC bus voltage and for providing the second DC bus voltage to the output connection; the second electrical converter electrically coupled in between the input connection and the output connection such that the first electrical converter and the second electrical converter are electrically arranged in parallel between the input connection and the output connection, wherein the second electrical converter is configured for receiving the first DC bus voltage, for converting the first DC bus voltage into the second DC bus voltage and for providing the second DC bus voltage to the output connection; the first auxiliary converter electrically coupled in series between the first electrical converter and the input connection or between the first electrical converter and the output connection, with the first auxiliary converter being configured for adding the first compensation voltage to the first DC bus voltage applied to the first electrical converter or, respectively, to the first output voltage generated by the first electrical converter, wherein the first compensation voltage is determined such that the first current through the first electrical converter corresponds to the second current through the second electrical converter; and the second auxiliary converter electrically coupled in series between the second electrical converter and the input connection or between the second electrical converter and the output connection, with the second auxiliary converter being configured for adding the second compensation voltage to the first DC bus voltage applied to the second electrical converter or, respectively, to the second DC bus voltage generated by the second electrical converter, wherein the second compensation voltage is determined such that the first current through the first electrical converter corresponds to the second current through the second electrical converter.

The converter arrangement may comprise three or more, e.g., N, electrical converters being electrically arranged in parallel between the input connection and the output connection, with N being a natural number. In this case, the converter arrangement may comprise N auxiliary converters, wherein each of these auxiliary converters is electrically arranged in series with a corresponding one of the electrical converters. Further, the auxiliary converters have to be able to provide bipolar output voltages for adding positive or negative compensation voltages to the output voltage of the corresponding electrical converter.

A fourth aspect relates to a computer program for operating the converter arrangement as described above and in the following. The computer program comprises computer-readable instructions which, when being executed by a processor of the controller, carry out the method as described above and in the following.

A fifth aspect relates to a computer-readable medium on which the computer program is stored. The computer-readable medium may be a floppy disk, a hard disk, an USB storage device, a RAM, a ROM, an EPROM or a FLASH memory. The computer readable medium may also be a data communication network, e.g. the Internet, which allows downloading a program code. In general, the computer-readable medium may be a non-transitory or transitory medium.

It has to be understood that some features of the present invention are described with respect to one of the aspects only for conciseness reasons and to avoid unnecessary repetitions, but that these features may be easily transferred to one or more of the other aspects by the person skilled in the art.

The above aspects, in particular the auxiliary converters electrically coupled in series with the corresponding electrical converters, enable to balance load currents between different ones of the electrical converters and to cover losses of the auxiliary converters that do not have a distinct power supply on their own. This contributes to an equal load sharing between all parallel connected electrical converters without the need for a separate power supply. In particular, the currents and the power can be equally distributed over all electrical converters of the converter arrangement. This enables to provide a high total output power by the converter arrangement and/or to prevent an overloading of one or more electrical converters of the converter arrangement. In many cases, the compensation voltages can be kept relatively low compared to the total input voltage of the converter arrangement, i.e., the first DC bus voltage, when the auxiliary voltage sources are coupled to the input connection, and can be kept relatively low compared to the total output voltage, i.e., the second DC bus voltage, when the auxiliary voltage sources are coupled to the output connection. For example, the compensation voltage may be approximately 1% to 10%, e.g., 1% to 5%, of the second DC bus voltage. For example, in many applications compensation voltages in a range from 1 V to 50 V, e.g. 10 V to 20 V, may be sufficient to equally distribute the currents over all electrical converters of the converter arrangement. This enables to use a low power auxiliary converters for generating the compensation voltage. This enables to keep the overall complexity and/or a weight and/or a size of the of the converter arrangement low.

The energy source is configured for providing the first DC bus voltage. The energy source may be a DC energy source, such as a battery or photovoltaic panel. The load is configured for receiving the second DC bus voltage. That the electrical converters are arranged electrically in parallel may mean that input terminals of the electrical converters are electrically coupled to the input connection and that output terminals of the electrical converters are electrically coupled to the output connection. That the first auxiliary converter is electrically arranged in series with the first electrical converter may mean that the first auxiliary converter is electrically arranged in series between an output terminal of the first electrical converter and the output connection of the converter arrangement. That the second auxiliary converter is electrically arranged in series with the second electrical converter may mean that the second auxiliary converter is electrically arranged in series between an output terminal of the second electrical converter and the output connection of the converter arrangement. The first and second auxiliary converters each simply may be embodied as a power converter. The auxiliary converters each may be configured as or may be referred to as buck converter, boost converter, or flyback converter, for example.

The first and second electrical converters each are configured for generating the second DC bus voltage. Because the first and second electrical converters are electrically paralleled, the second DC bus voltage is a total output voltage of the converter arrangement. However, in the reality, the first output voltage actually generated by the first electrical converter and the second output voltage actually generated by the second electrical converter may differ from the second DC bus voltage actually generated by the corresponding electrical converter. So, the second DC bus voltage may be interpreted as an actual total output voltage generated by the converter arrangement, whereas the first and second output voltages may be interpreted as actual output voltages of the corresponding electrical converters.

The difference between the first and second current values may be determined by a first PI-controller. The first compensation signal may be used to control one or more semiconductor switches of the first auxiliary converter. To this end, the first compensation signal may comprise gate pulses for controlling one or more semiconductor switches of the first auxiliary voltage source. The first compensation signal may be generated depending on the first compensation voltage, e.g., by Pulse Width Modulation (PWM), wherein the first compensation signal may be representative of the first compensation voltage. The second compensation signal may be used to control one or more semiconductor switches of the second auxiliary converter. To this end, the second compensation signal may comprise gate pulses for controlling one or more semiconductor switches of the second auxiliary voltage source. The second compensation signal may be generated depending on the second compensation voltage, e.g., by PWM, wherein the second compensation signal may be representative of the second compensation voltage.

The method may be carried out by a controller arrangement. The controller arrangement may be a component of the converter arrangement or may be provided separately from the converter arrangement. The method steps described above may be carried out by a load current balancing control of the controller arrangement. In particular, the load current balancing control may be configured for receiving the first and second current values, for determining the first difference, for determining the first and second compensation voltage values, and for sending the first and second compensation signals to the first and, respectively, second auxiliary converters.

According to an embodiment, the first auxiliary converter and the second auxiliary converter are electrically coupled to each other by a balancer DC link having a first balancer capacitor and a second balancer capacitor being electrically arranged in series and having a balancer midpoint between the first balancer capacitor and the second balancer capacitor, and the method comprises: receiving a DC link voltage reference value corresponding to a DC link voltage to be applied over the balancer DC link; receiving a first DC link voltage value corresponding to a first DC link voltage actually applied over the first balancer capacitor; receiving a second DC link voltage value corresponding to a second DC link voltage actually applied over the second balancer capacitor; determining a second difference between the DC link voltage reference value and a sum of the first DC link voltage value and the second DC link voltage value, wherein the first compensation voltage value is determined depending on the second difference and wherein the second compensation voltage value is determined depending on the second difference. These steps may be carried out by a total DC link voltage control of the converter arrangement. In particular, the total DC link voltage control may be configured for receiving the DC link voltage reference value, and the first and second DC link voltage values, and for determining the second difference. The total DC link voltage control may be a component of the controller arrangement.

According to an embodiment, a first differential mode component reference value and a second differential mode component reference value are determined from the first difference, a common mode component reference value is determined from the second difference, the first compensation voltage value is determined depending on the first difference by determining the first compensation voltage value depending on the first differential mode component reference value and the common mode component reference value, and the second compensation voltage value is determined depending on the first difference by determining the second compensation voltage value depending on the second differential mode component reference value and the common mode component reference value. For example, the common mode component reference value may be added to the first differential mode component reference value and the first compensation voltage value may be determined depending on the sum of the common mode component reference value and the first differential mode component reference value. Alternatively or additionally, the common mode component reference value may be added to the second differential mode component reference value and the second compensation voltage value may be determined depending on the sum of the common mode component reference value and the second differential mode component reference value. The common mode component reference value may be determined from the second difference by a second PI controller. These steps may be carried out partly by the load current balancing control and partly by the total DC link voltage control.

According to an embodiment, the first compensation voltage value is determined depending on a predetermined feedback gain value, and/or the second compensation voltage value is determined depending on the predetermined feedback gain value. For example, a first capacitor current value and a second capacitor current value may be received, wherein the first capacitor current value represents an actual current in a first converter capacitor of the first auxiliary converter and wherein the second capacitor current value represents an actual current in a second converter capacitor of the second auxiliary converter. The first capacitor current value may be measured by a first current sensor coupled to the first converter capacitor of the first auxiliary converter and may be sent to a damping stage. The second capacitor current value may be measured by a second current sensor coupled to the second converter capacitor of the second auxiliary converter and may be sent to the damping stage. The first compensation voltage value may be determined depending on the predetermined feedback gain value by multiplying the first capacitor current value with the predetermined feedback gain value, e.g., by the damping stage, and by subtracting the resulting product from the sum of the common mode component and of the first differential mode component. The second compensation voltage value may be determined depending on the predetermined feedback gain value by multiplying the second capacitor current value with the predetermined feedback gain value, e.g., by the damping stage, and by subtracting the resulting product from the sum of the common mode component and of the second differential mode component. The damping stage may be a component of the controller arrangement.

According to an embodiment, the first auxiliary converter and the second auxiliary converter are electrically coupled to each other via a balancer unit, wherein the balancer unit comprises the balancer DC link, and the method further comprises: determining a third difference between the first DC link voltage value and the second DC link voltage value and generating a balancing signal for controlling the balancer unit depending on the third difference. The balancing signal may be used to control one or more semiconductor switches of the balancer unit. To this end, the balancing signal may comprise gate pulses for controlling one or more semiconductor switches of the balancer unit. The balancing signal may be generated depending on the third difference, e.g., by PWM.

According to an embodiment, the method comprises: receiving an inductor current value being representative of a current through the balancer unit; determining an inductor current reference value from the third difference; and determining a fourth difference between the inductor current reference value and the inductor current value, wherein the balancing signal is generated depending on the third difference by generating the balancing signal depending on the fourth difference, e.g., by PWM. The inductor current reference value may be determined from the third difference by a PI voltage controller, which may be referred to as third PI controller in the following and to which the third difference is supplied as an input and which provides the inductor current reference value as an output. The fourth difference may be processed by a current controller and the balancing signal may be generated from an output of the current controller, e.g., by PWM. So, the DC-link voltage balancing control incorporates a cascaded PI-P controller with the inner current controller that controls the inductor current and the outer PI voltage controller that ensures proper balancing between positive and negative compensator DC-link voltages. The control of the balancer unit may be independent of the remaining control loops, described above and in the following.

According to an embodiment, the first auxiliary converter and the second auxiliary converter are electrically coupled to each other by a balancer DC link having a first balancer capacitor and a second balancer capacitor being electrically arranged in series and having a balancer midpoint between the first balancer capacitor and the second balancer capacitor.

According to an embodiment, the converter arrangement comprises the balancer unit electrically coupling the first auxiliary converter and the second auxiliary converter to each other, wherein the balancer unit comprises the balancer DC link.

According to an embodiment, the first auxiliary converter comprises a first converter DC link, the second auxiliary converter comprises a second converter DC link, and the first and second converter DC links are electrically coupled to each other via the balancer DC link. For example, the first DC link comprises a first DC midpoint, the second DC link comprises a second DC midpoint and the first and second DC midpoints are electrically coupled to each other via the balancer midpoint. In addition, the positive and negative potentials of these DC-links are electrically coupled to each other such that the first and second converter DC links and the balancer DC link form a common DC link of the converter arrangement.

These and other aspects of the invention will be apparent from and elucidated with reference to the embodiments described hereinafter.

## BRIEF DESCRIPTION OF THE DRAWINGS

The subject matter of the invention will be explained in more detail in the following text with reference to exemplary embodiments which are illustrated in the attached drawings.

Fig. 1 shows a circuit diagram of a converter arrangement, in accordance with an embodiment of the present invention.

Fig. 2 shows a circuit diagram of a controller arrangement for controlling the converter arrangement of figure 1, in accordance with an embodiment of the present invention.

The reference symbols used in the drawings, and their meanings, are listed in summary form in the list of reference symbols. In principle, identical parts are provided with the same reference symbols in the figures.

## DETAILED DESCRIPTION OF EXEMPLARY EMBODIMENTS

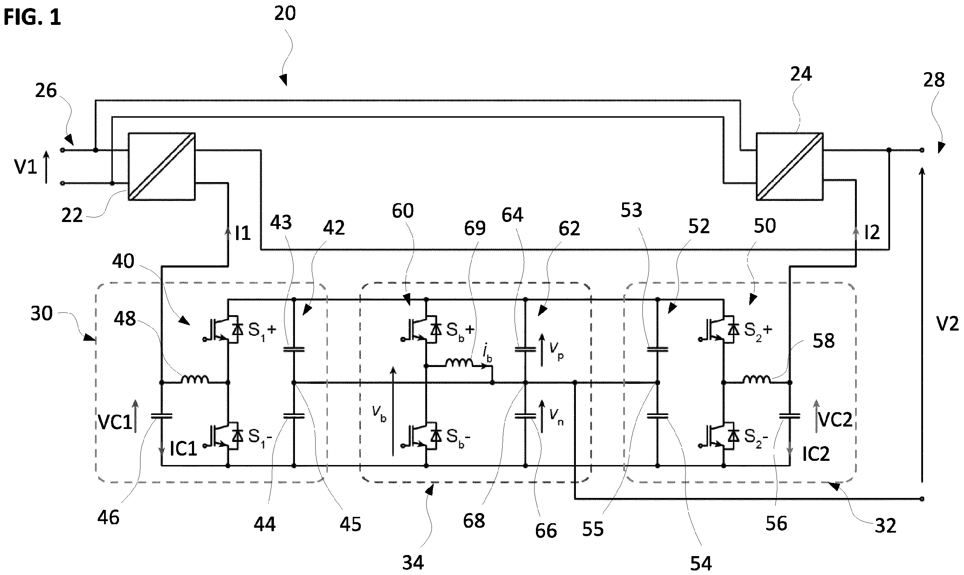

Fig. 1 shows a circuit diagram of a converter arrangement 20, in accordance with an embodiment of the present invention. The converter arrangement 20 is configured for converting a first DC bus voltage into a second DC bus voltage. The first DC bus voltage may be a total input voltage of the converter arrangement 20 and the second DC bus voltage may be a total output voltage of the converter arrangement 20.

The converter arrangement 20 comprises an input connection 26, an output connection 28, a first electrical converter 22, at least a second electrical converter 24, a first auxiliary converter 30, at least a second auxiliary converter 32, and a balancer unit 34. The electrical converters 22, 24 may be of the same type or may be of different types. For example, each of the electrical converters 22, 24 may be an LLC resonant converter, in short an "LLC converter". However, other converter topologies may also be used, e.g., dual-active bridge converters, forward converters, or flyback converters. The auxiliary converters 30, 32 each may be a buck converter, for example.

The input connection 26 is configured for electrically coupling the converter arrangement 20 to an energy source (not shown). The energy source may be configured for providing the first DC bus voltage to the converter arrangement 20 via the input connection 26. The energy source may be a battery or a photovoltaic panel. An input terminal of the first electrical converter 22 and an input terminal of the second electrical converter 24 are electrically coupled to the input connection 26. The first DC bus voltage corresponds to a first DC bus voltage value V1, which may be measured at the input connection 38, e.g., by a voltmeter (not shown) electrically coupled to the input connection 38.

The output connection 28 is configured for electrically coupling the converter arrangement 20 to a load (not shown). The load may be configured for receiving the second DC bus voltage. The load may be a DC load, such as a DC motor, for example. An output terminal of the first electrical converter 22 and an output terminal of the second electrical converter 24 are electrically coupled to the output connection 28, wherein one pole of the first electrical converter 22 and one pole of the second electrical converter 24 are directly coupled to the output connection 28, whereas the other pole of the first electrical converter 22 and the other pole of the second electrical converter 24 are indirectly coupled to the output connection 28 via the first auxiliary converter 30 and, respectively, the second auxiliary converter 32. The second DC bus voltage corresponds to a second DC bus voltage value V2, which may be measured at the output connection 48, e.g., by a voltmeter (not shown) electrically coupled to the output connection 48.

The first electrical converter 22 is electrically coupled in between the input connection 26 and the output connection 28. The first electrical converter 22 is configured for receiving the first DC bus voltage, for converting the first DC bus voltage into the second DC bus voltage and for providing the second DC bus voltage to the output connection 28, thereby generating a first current. However, an actual first output voltage of the first electrical converter 22 may differ from the second DC bus voltage to be achieved by the first electrical converter 22, e.g., due to an insertion of an additional first compensation voltage generated by the first auxiliary converter 30 in series to the output terminal of the first electrical converter 22, as described below. The second electrical converter 24 is electrically coupled in between the input connection 26 and the output connection 28 such that the first electrical converter 22 and the second electrical converter 24 are electrically arranged in parallel between the input connection 26 and the output connection 28. The second electrical converter 24 is configured for receiving the first DC bus voltage, for converting the first DC bus voltage into the second DC bus voltage and for providing the second DC bus voltage to the output connection 28, thereby generating a second current. However, an actual second output voltage of the second electrical converter 24 may differ from the second DC bus voltage to be achieved by the second electrical converter 24, e.g., due to an insertion of an additional first compensation voltage generated by the first auxiliary converter 30 in series to the output terminal of the first electrical converter 22, as described below. That the electrical converters 22, 24 are arranged electrically in parallel may mean that input terminals of the electrical converters 22, 24 are electrically coupled to the input connection 26 and that output terminals of the electrical converters 22, 24 are electrically coupled to the output connection 28.

The first auxiliary converter 30 is electrically coupled in series between the first electrical converter 22 and the output connection 28. That the first auxiliary converter 30 is electrically arranged in series with the first electrical converter 22 may mean that the first auxiliary converter 30 is electrically arranged in series between the output terminal of the first electrical converter 22 and the output connection 28 of the converter arrangement 20. The first auxiliary converter 30 may have a first semiconductor arrangement 40, a first converter DC link 42 having a first DC link capacitor 43, a second DC link capacitor 44, and a first DC midpoint 45, a first converter capacitor 46, and a first converter inductance 48. The first converter inductance 48 may comprise a coil and/or winding. The first semiconductor arrangement 40 may comprise first switches $S_1+$, $S_1-$ each being embodied by a corresponding semiconductor switch, such as a MOSFET, for example. The first converter inductance 48 may be electrically arranged between the first converter capacitor 46 and the first semiconductor arrangement 40. The first semiconductor arrangement 40 is electrically coupled to the output terminal of the first electrical converter 22 via the first converter inductance 48 and the first converter capacitor 46. The first auxiliary converter 30 is configured for adding a first compensation voltage corresponding to a first compensation value VC1 to the second output voltage actually generated by the first electrical converter 22. The first compensation voltage is generated such that the first current through the first electrical converter 22 corresponds to the second current through the second electrical converter 24.

The second auxiliary converter 32 is electrically coupled in series between the second electrical converter 24 and the output connection 28. That the second auxiliary converter 32 is electrically arranged in series with the second electrical converter 24 may mean that the second auxiliary converter 32 is electrically arranged in series between the output terminal of the second electrical converter 24 and the output connection 28 of the converter arrangement 20. The second auxiliary converter 32 may have a second semiconductor arrangement 50, a second converter DC link 52 having a third DC link capacitor 53, a fourth DC link capacitor 54, and a second DC midpoint 55, a second converter capacitor 56, and a second converter inductance 58. The second semiconductor arrangement 50 may comprise second switches $S_2+$, $S_2-$ each being embodied by a corresponding semiconductor switch, such as a MOSFET, for example. The second converter inductance 58 may comprise a coil and/or winding. The second converter inductance 58 may be electrically arranged between the second converter capacitor 56 and the second semiconductor arrangement 50. The second semiconductor arrangement 50 is electrically coupled to the output terminal of the second electrical converter 24 via the second converter inductance 58 and the second converter capacitor 56. The second auxiliary converter 32 is configured for adding a second compensation voltage corresponding to a second compensation value VC2 to the second output voltage actually generated by the second electrical converter 24. The second compensation voltage is generated such that the first current through the first electrical converter 22 corresponds to the second current through the second electrical converter 24.

The first and second auxiliary voltage source 30, 32 each may be configured for providing a bipolar output voltage, in particular a positive or a negative output voltage with respect to the midpoint.

The balancer unit 34 comprises a third semiconductor arrangement 60, a balancer DC link 62, and a balancer inductance 69. The third semiconductor arrangement 60 may comprise a first balancer switch $S_b+$ and a second balancer switch $S_b-$ each being embodied by a corresponding semiconductor switch, such as a MOSFET, for example. The balancer inductance 69 may comprise a coil and/or winding. The balancer DC link 62 comprises a first balancer capacitor 64, a second balancer capacitor 66, and a balancer midpoint 68 coupling the first balancer capacitor 64 to the second balancer capacitor 66.

The first and second converter DC links 42, 52 each are electrically coupled to the balancer DC link 62. So, the converter DC links 42, 52 and the balancer DC link 62 may form a common DC link of the converter arrangement 20. In particular, the first DC link capacitor 43 of the first converter DC link 42 and the third DC link capacitor 53 of the second converter DC link 52 are electrically coupled to a positive rail of the converter arrangement 20 to which the first balancer capacitor 64 is coupled. The second DC link capacitor 44 of the first converter DC link 42 and the fourth DC link capacitor 54 of the second converter DC link 52 are electrically coupled to a negative rail of the converter arrangement 20 to which the second balancer capacitor 66 is coupled. The first DC midpoint 45 of the first converter DC link 42 and the second DC midpoint 55 of the second converter DC link 52 are electrically coupled to the balancer midpoint 68. However, other capacitor configurations may also be possible for the common DC link of the converter arrangement 20. For example, the first DC link capacitor 43, the first balancer capacitor 64, and the third DC link capacitor 53 may be substituted by a first common capacitor, and/or the second DC link capacitor 44, the second balancer capacitor 66, and the fourth DC link capacitor 54 may be substituted by a second common capacitor.

In general, the converter arrangement 20 may comprise three or more, e.g., N, electrical converters being electrically arranged in parallel between the input connection 26 and the output connection 28, with N being a natural number. In this case, the converter arrangement 20 may comprise N auxiliary converters, wherein each of these auxiliary converters is electrically arranged in series with a corresponding one of the electrical converters. Further, the auxiliary converters each have to be able to add positive or negative compensation voltages to the output voltage of the corresponding electrical converter.

In the embodiment shown in figure 1 and described in the foregoing, which may be referred to as first embodiment in the following, the first DC bus voltage which represents the total input voltage of the converter arrangement 20 is applied to that side of the electrical converters 22, 24 at which the corresponding auxiliary converters 30, 32 are not arranged, whereas the second DC bus voltage which represents the total output voltage of the converter arrangement 20 is generated at that side of the electrical converters 22, 24 at which the corresponding auxiliary converters 30, 32 are arranged. So, the auxiliary converters 30, 32 are arranged between the output terminals of the corresponding electrical converters 22, 24 and the output connection 48. As described above, in this first embodiment, the auxiliary converters 30, 32 are configured such that they are able to add the corresponding compensation voltage to the output voltage generated by the corresponding electrical converter 22, 24.

However, in an alternative embodiment which is not shown in the figures and which may be referred to as second embodiment in the following, the first DC bus voltage may be applied to that side of the electrical converters 22, 24 at which the corresponding auxiliary converters 30, 32 are arranged, whereas the second DC bus voltage is generated at that side of the electrical converters 22, 24 at which the corresponding auxiliary converters 30, 32 are not arranged. In this second embodiment, the structure of the converter arrangement 20 may correspond to the structure of the converter arrangement 20 shown in figure 1, wherein only the sides to which the total input voltage is applied and at which the total output voltage is generated are switched. So, in the second embodiment in figure 1 the input connection 38 and the output connection 48 would be interconverted such that the auxiliary converters 30, 32 would be arranged between the input terminals of the corresponding electrical converters 22, 24 and the input connection 38. Further, in this alternative embodiment, the auxiliary converters 30, 32 are configured such that they are able to add the corresponding compensation voltage to the first DC bus voltage applied to the corresponding electrical converter 22, 24.

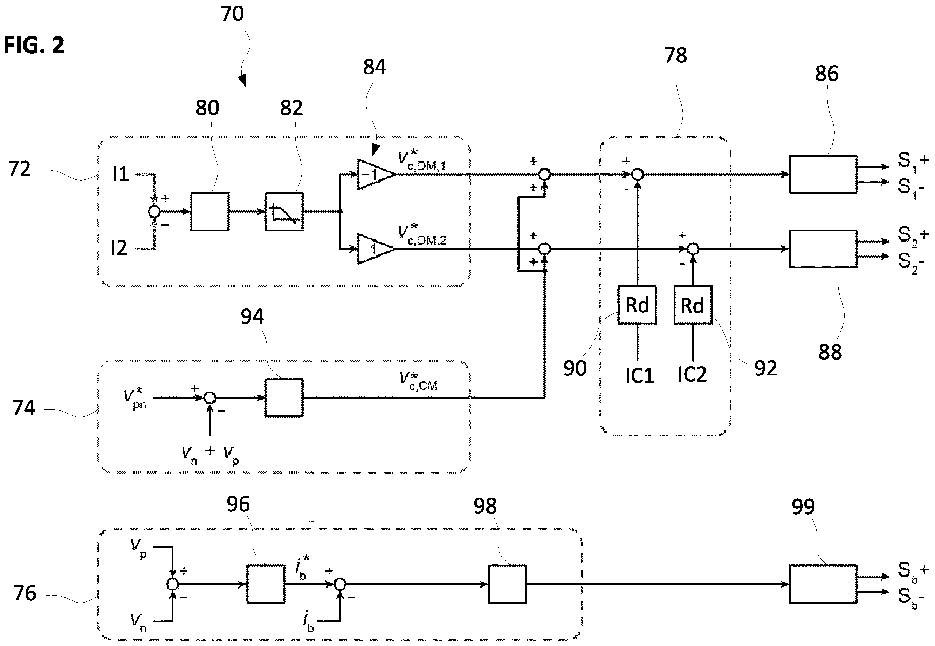

Fig. 2 shows a circuit diagram of a controller arrangement 70 for controlling the converter arrangement 20 of figure 1, in accordance with an embodiment of the present invention. The controller arrangement 70 and the method for controlling the converter arrangement 20 carried out by the controller arrangement 70 are described in the following.

The controller arrangement 70 may comprise a load balancing control 72, a total DC link voltage control 74, a DC link voltage balancing control 76, and a damping stage 78.

The load balancing control 72 may comprise a first PI controller 80, a lowpass filter 82, and a splitting stage 84. The load balancing control 72 may receive a first current value I1 being representative of the first current through the first electrical converter 22. The first current value I1 may be generated by a current sensor (not shown) measuring the first current at the output terminal of the first electrical converter 22. Then, the first current value I1 may be transferred to the load balancing control 72. The load balancing control 72 may receive a second current value I2 being representative of the second current through the second electrical converter 24. The second current value I2 may be generated by another current sensor (not shown) measuring the second current at the output terminal of the second electrical converter 24. Then, the second current value I2 may be transferred to the load balancing control 72. The load balancing control 72 may receive the first and second current values I1, I2 simultaneously or one after the other. Then, the load balancing control 72 may determine a first difference between the first and second current values I1, I2. In particular, the load balancing control 72 may subtract the second current value I2 from the first current value I1 to determine the first difference. The first difference between the first and second current values I1, I2 may be further processed by the first PI controller 80. The output of the first PI controller 80 may be further processed by the lowpass filter 82. The output of the lowpass filter 82 may be forwarded in two different paths by the splitting stage 84, wherein the splitting stage 84 changes the sign of the output in one of the paths thereby generating a first differential mode component reference value $V^*_{c,DM,1}$ for one of the paths and a second differential mode component reference value $V^*_{c,DM,2}$ for the other one of the paths.

The total DC link voltage control 74 may comprise a second PI controller 94. The total DC link voltage control 74 may receive a DC link voltage reference value $V^*_{pn}$ corresponding to a DC link voltage reference to be applied over the balancer DC link 62, a first DC link voltage value $V_p$ corresponding to a first DC link voltage actually applied over the first balancer capacitor 64, and a second DC link voltage value $V_n$ corresponding to a second DC link voltage actually applied over the second balancer capacitor 66. Then, the total DC link voltage control 74 may determine a second difference between the DC link voltage reference value $V^*_{pn}$ and the sum of the first DC link voltage value $V_p$ and the second DC link voltage value $V_n$. The second PI controller 94 may determine a common mode component reference value $V^*_{c,CM}$ depending on the second difference. The common mode component reference value $V^*_{c,CM}$ may be added to the first differential mode component reference value $V^*_{c,DM,1}$ to determine the first compensation voltage value VC1 and to the second differential mode component reference $V^*_{c,DM,2}$ to determine the second compensation voltage value VC2.

In particular, the compensation voltage values VC1, VC2 may be split into a common mode component value

$$v_{c,CM} = \frac{1}{N}\sum_k v_{c,k}$$

with $v_{c,k}$ representing the $k^{th}$ compensation voltage value VCk, and a differential mode component value

$$v_{c,DM,k} = v_{c,k} - v_{c,CM}$$

with k being a natural number reaching from 1 to N, which is the number of auxiliary converters .

The differential mode component corresponding to the differential mode component value is used to compensate the load current imbalances, i.e., to ensure $I_{\{k\}}$ = I for all k in 1 to N, e.g., I1 = I2 = I in the embodiment described with respect to the figures, with I being the total current through the converter arrangement 20. As long as equal load currents are ensured, the generation of the corresponding differential mode voltage does not require any net power of the compensator since

$$P_{DM} = \sum_k v_{c,DM,k}\, i_k = i \sum_k v_{c,DM,k} = 0,$$

i.e., power is only exchanged between different ones of the auxiliary converters 30, 32, but no net power is delivered.

Contrary to the differential mode voltage, the generation of the common mode voltage results in a net power flow into the auxiliary converters 30, 32 and the balancer unit 34

$$P_{CM} = \sum_k v_{c,CM}\, i_k = i \sum_k v_{c,CM} = N\, i \cdot v_{c,CM}$$

that is used to cover the losses and stabilize the total DC-link voltage (i.e., the summed DC-link voltages $V_{pn} = V_p + V_n$) of the auxiliary converters 30, 32 and the balancer unit 34. It has to be noted that in order to deliver power, an output current is required, i.e. it is not possible to ensure a constant DC-link voltage if there is no load present at the output connection 28. However, in this case of no-load conditions, load current balancing is not required. It just has to be ensured that the dynamics are sufficiently fast such that it is possible to charge the DC-link once the load at the output of the system changes.

The damping stage 78 may comprise a first damping block 90 and a second damping block 92. The damping stage 78 may receive a first capacitor current value IC1 and a second capacitor current value IC2. The first capacitor current value IC1 is representative of a first capacitor current in the first converter capacitor 46 of the first auxiliary converter 30. The second capacitor current value IC2 is representative of a second capacitor current in the second converter capacitor 56 of the second auxiliary converter 32. The first capacitor current value IC1 may be generated by a current sensor (not shown) coupled to the first converter capacitor 46. The second capacitor current value IC2 may be generated by another current sensor (not shown) coupled to the second converter capacitor 56.

The first damping block 90 is configured to determine a first damping voltage value depending on the first capacitor current value IC1 and on a predetermined feedback gain value Rd. The second damping block 92 is configured to determine a second damping voltage value depending on to the second capacitor current value IC2 and on the predetermined feedback gain value Rd.

In particular, the first damping voltage value may be determined by multiplying the first capacitor current value IC1 by the predetermined feedback gain value Rd, and/or the second damping voltage value may be determined by multiplying the second capacitor current value IC2 by the predetermined feedback gain value Rd. Then, the first damping voltage value may be subtracted from the sum of the first differential mode component reference value $V^*_{c,DM,1}$ and the common mode component reference value $V^*_{c,CM}$, and/or the second damping voltage value may be subtracted from the sum of the second differential mode component reference $V^*_{c,DM,2}$ and the common mode component reference $V^*_{c,CM}$, by the damping stage 78. Subtracting the first and second damping voltage values from the corresponding sum corresponds to a virtual damping, in other words active damping, of a resonance of the auxiliary converters. Instead of the virtual/active damping also any other control strategy for buck converters can be applied, e.g., employing an inner current controller controlling an inductor current of the corresponding auxiliary converter, or using state-feedback (e.g., an LQR controller).

A first modulator 86 of the converter arrangement 20 may determine a first compensation signal for the first semiconductor arrangement 40 from the difference between the first damping voltage value and the sum of the first differential mode component reference value $V^*_{c,DM,1}$ and the common mode component reference value $V^*_{c,CM}$, e.g., by Pulse Width Modulation (PWM). The first compensation signal may comprise gate pulses to be provided to the gates of the first switches $S_1+$, $S_1-$.

A second modulator 88 of the converter arrangement 20 may determine a second compensation signal for the second semiconductor arrangement 50 from the difference between the second damping voltage value and the sum of the second differential mode component reference value $V^*_{c,DM,2}$ and the common mode component reference value $V^*_{c,CM}$, e.g., by Pulse Width Modulation (PWM). The second compensation signal may comprise gate pulses to be provided to the gates of the second switches $S_2+$, $S_2-$.

The DC link voltage balancing control 76 may comprise a third PI controller 96 and a current controller 98. The DC link voltage balancing control 76 may determine a third difference between the first DC link voltage value $V_p$ and the second DC link voltage value $V_n$. The third difference may be processed by the third PI controller 96 to provide an inductor current reference value $i^*_b$ at an output of the third PI controller 96. The DC link voltage balancing control 76 may receive an inductor current value $i_b$ being representative of an actual inductor current through the balancer inductance 69. The inductor current value $i_b$ may be measured by a current sensor (not shown) coupled to the balancer inductance 69. The DC link voltage balancing control 76 may determine a fourth difference between the inductor current reference value $i^*_b$ and the inductor current value $i_b$. The current controller 98 may further process the fourth difference, wherein an output of the current controller 98 may be provided to a third modulator 99 of the converter arrangement 99. The third modulator 99 may determine a balancing signal for the balancing unit 34 from the output of the current controller 98, e.g., by Pulse Width Modulation (PWM). The balancing signal may comprise gate pulses to be provided to the gates of the balancer switches $S_b+$, $S_b-$.

So, the DC-link voltage balancing control 76 incorporates a cascaded PI-P controller with the inner current controller that controls the inductor current and the outer PI voltage controller that ensures proper balancing between positive and negative compensator DC-link voltage. The control of the balancer unit 34 may be independent of the remaining control loops, described above and in the following.

So, the controller arrangement 70 is configured for operating the converter arrangement 20. To this end, the controller arrangement 70 comprises a memory (not shown) for storing one or more current values and/or one or more voltage values and a processor (not shown) communicatively coupled to the memory and being configured for carrying out the method as described in the foregoing based on the one or more current values and/or one or more voltage values, respectively. Alternatively, a dedicated memory and/or a dedicated processor may be provided to each of the load current balancing control 72, the total DC link voltage control 74, the DC link voltage balancing control 76, and/or the damping stage 78. The one or more current values may be at least one of the first current value I1, the second current value I2, the difference between the first and second current values I1, I2, the capacitor current values IC1, IC2, the inductor current value $i_b$, and the inductor current value reference $i_b^*$. The one or more voltage values may be at least one of the first compensation voltage value VC1, the second compensation voltage value VC2, the first differential mode component reference value $V_{c,DM,1}^*$, the second differential mode component reference value $V_{c,DM,2}^*$, and the common mode component reference value $V_{c,CM}^*$.

The controller arrangement 70 may carry out a computer program for operating the converter arrangement 20. The computer program may comprise computer-readable instructions which, when being executed by the processor of the controller arrangement 70, carry out the control method as described in the foregoing. The computer program may be stored on a computer-readable medium, e.g., on the memory of the controller arrangement 70.

The controller arrangement 70 shown in figure 2 and its function are described with respect to the first embodiment of the converter arrangement 20 described with respect to figure 1. As described above, in this first embodiment of the converter arrangement 20, the total output voltage is generated at that side of the converter arrangement 20 in which the auxiliary converters 30, 32 are arranged, i.e., the right side of figure 1, and the compensation voltages are added to the output voltages of the electrical converters 22, 24. However, the controller arrangement 70 shown in figure 2 and its function can easily be transferred to the second embodiment of the converter arrangement 20 described at the end of the description of figure 1. As described above, in this second embodiment of the converter arrangement 20, the input voltage is applied at that side of the converter arrangement 20 in which the auxiliary converters 30, 32 are arranged and the compensation voltages are added to the first DC bus voltage, i.e., the total input voltage, applied to the corresponding electrical converters 22, 24.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

LIST OF REFERENCE SYMBOLS

| | |
|---|---|
| Converter arrangement | 20 |
| First electrical converter | 22 |
| Second electrical converter | 24 |
| Input connection | 26 |
| Output connection | 28 |
| First auxiliary converter | 30 |
| Second auxiliary converter | 32 |
| Balancer unit | 34 |
| First semiconductor arrangement | 40 |
| First converter DC link | 42 |
| First DC link capacitor | 43 |
| Second DC link capacitor | 44 |
| First DC midpoint | 45 |
| First converter capacitor | 46 |
| First converter inductance | 48 |

(continued)

| | |
|---|---|
| Second semiconductor arrangement | 50 |
| Second converter DC link | 52 |
| Third DC link capacitor | 53 |
| Fourth DC link capacitor | 54 |
| Second DC midpoint | 55 |
| Second converter capacitor | 56 |
| Second converter inductance | 58 |
| Third semiconductor arrangement | 60 |
| Balancer DC link | 62 |
| First balancer capacitor | 64 |
| Second balancer capacitor | 66 |
| Balancer midpoint | 68 |
| Balancer inductance | 69 |
| Controller arrangement | 70 |
| Load current balancing control | 72 |
| Total DC link voltage control | 74 |
| DC link voltage balancing control | 76 |
| Damping stage | 78 |
| First PI controller | 80 |
| Lowpass filter | 82 |
| Splitting stage | 84 |
| First modulator | 86 |
| Second modulator | 88 |
| First damping block | 90 |
| Second damping block | 92 |
| Second PI controller | 94 |
| Third PI controller | 96 |
| Current controller | 98 |
| Third modulator | 99 |
| First differential mode component reference value | |
| Second differential mode component reference value | $V^*_{c,DM,2}$ |
| Common mode component reference value | $V^*_{c,CM}$ |
| First DC bus voltage value | V1 |
| Second DC bus voltage value | V2 |
| First current value | I1 |
| Second current value | I2 |
| First capacitor current value | IC1 |
| Second capacitor current value | IC2 |
| Inductor current value | $i_b$ |
| Inductor current reference value | $i^*_b$ |
| First compensation voltage value | VC1 |
| Second compensation voltage value | VC2 |
| First switches | $S_1$ |
| Second switches | $S_2$ |
| Balancer switches | $S_b$ |
| First DC link voltage value | $V_p$ |
| Second DC link voltage value | $V_n$ |
| Balancing voltage value | $V_b$ |

(continued)

| DC link voltage reference value | $V_{pn}^*$ |
| Feedback gain value | Rd |

**Claims**

1. Method for operating a converter arrangement (20), the converter arrangement (20) being configured for converting a first DC bus voltage into a second DC bus voltage and comprising a first electrical converter (22), a second electrical converter (24) being electrically arranged in parallel to the first electrical converter (22), a first auxiliary converter (30) electrically arranged in series with the first electrical converter (22), and a second auxiliary converter (32) electrically arranged in series with the second electrical converter (24), the method comprising:

   receiving a first current value (I1) being representative of a first current through the first electrical converter (22);
   receiving a second current value (I2) being representative of a second current through the second electrical converter (24);
   determining a first difference between the first and second current values (I1, I2);
   determining a first compensation voltage value (VC1) depending on the first difference such that the first current corresponds to the second current when a first compensation voltage corresponding to the first compensation voltage value (VC1) is added by the first auxiliary converter (30) to the first DC bus voltage applied to the first electrical converter (22) or when the first compensation voltage is added to a first output voltage generated by the first electrical converter (22);
   determining a second compensation voltage value (VC2) depending on the first difference such that the first current corresponds to the second current when a second compensation voltage corresponding to the second compensation voltage value (VC2) is added by the second auxiliary converter (32) to the first DC bus voltage applied to the second electrical converter (24) or when the first compensation voltage is added to a second output voltage generated by the second electrical converter (24);
   sending a first compensation signal to the first auxiliary converter (30), wherein the first auxiliary converter (30) is configured to add the first compensation voltage to the first DC bus voltage applied to the first electrical converter (22) or, respectively, to the first output voltage generated by the first electrical converter (22) upon receiving the first compensation signal; and
   sending a second compensation signal to the second auxiliary converter (32), wherein the second auxiliary converter (32) is configured to add the second compensation voltage to the first DC bus voltage applied to the second electrical converter (24) or, respectively, to the second output voltage generated by the second electrical converter (24) upon receiving the second compensation signal.

2. Method in accordance with claim 1, wherein the first auxiliary converter (30) and the second auxiliary converter (32) are electrically coupled to each other by a balancer DC link (62) having a first balancer capacitor (64) and a second balancer capacitor (66) being electrically arranged in series and having a balancer midpoint (68) between the first balancer capacitor (64) and the second balancer capacitor (66), the method comprising:

   receiving a DC link voltage reference value ( $V_{pn}^*$ ) corresponding to a DC link voltage to be applied over the balancer DC link (62);
   receiving a first DC link voltage value ($V_p$) corresponding to a first DC link voltage actually applied over the first balancer capacitor (64);
   receiving a second DC link voltage value ($V_n$) corresponding to a second DC link voltage actually applied over the second balancer capacitor (66); and

   determining a second difference between the DC link voltage reference value ( $V_{pn}^*$ ) and a sum of the first DC link voltage value ($V_p$) and the second DC link voltage value ($V_n$), wherein the first compensation voltage value (VC1) is determined depending on the second difference and wherein the second compensation voltage value (VC2) is determined depending on the second difference.

3. Method in accordance with claim 2, wherein

a first differential mode component reference value ( $V_{c,DM,1}^*$ ) and a second differential mode component reference value ( $V_{c,DM,2}^*$ ) are determined from the first difference,

a common mode component reference value ( $V_{c,CM}^*$ ) is determined from the second difference,
the first compensation voltage value (VC1) is determined depending on the first difference by determining the first compensation voltage value (VC1) depending on the first differential mode component reference value ( $V_{c,DM,1}^*$ ) and the common mode component reference value ( $V_{c,CM}^*$ ), and
the second compensation voltage value (VC2) is determined depending on the first difference by determining the second compensation voltage value (VC2) depending on the second differential mode component reference value ( $V_{c,DM,2}^*$ ) and the common mode component reference value ( $V_{c,CM}^*$ ).

4. Method in accordance with one of the preceding claims, wherein

the first compensation voltage value (VC1) is determined depending on a predetermined feedback gain value (Rd), and/or
the second compensation voltage value (VC2) is determined depending on the predetermined feedback gain value (Rd).

5. Method in accordance with one of claims 2 to 4, wherein the first auxiliary converter (30) and the second auxiliary converter (32) are electrically coupled to each other via a balancer unit (34) and wherein the balancer unit (34) comprises the balancer DC link (62), the method further comprising:

determining a third difference between the first DC link voltage value ($V_p$) and the second DC link voltage value ($V_n$);
generating a balancing signal for controlling the balancer unit (34) depending on the third difference.

6. Method in accordance with claim 5, comprising:

receiving an inductor current value ($i_b$) being representative of a current through the balancer unit (34);

determining an inductor current reference value ( $i_b^*$ ) from the third difference; and

determining a fourth difference between the inductor current reference value ( $i_b^*$ ) and the inductor current value ($i_b$), wherein the balancing signal is generated depending on the third difference by generating the balancing signal depending on the fourth difference.

7. Controller (102) for operating a converter arrangement (20), the controller (102) comprising:

a memory for storing one or more current values and/or one or more voltage values; and
a processor communicatively coupled to the memory and being configured for carrying out the method in accordance with one of the preceding claims based on the one or more current values and/or one or more voltage values, respectively.

8. Converter arrangement (20) for converting a first DC bus voltage into a second DC bus voltage, the converter arrangement (20) comprising:

an input connection (26) for electrically coupling the converter arrangement (20) to an energy source, wherein the energy source is configured for providing the first DC bus voltage;
an output connection (28) for electrically coupling the converter arrangement (20) to a load, wherein the load is configured for receiving the second DC bus voltage;
a first electrical converter (22) electrically coupled in between the input connection (26) and the output connection (28) and being configured for receiving the first DC bus voltage, for converting the first DC bus voltage into the second DC bus voltage and for providing the second DC bus voltage to the output connection (28);
a second electrical converter (24) electrically coupled in between the input connection (26) and the output connection (28) such that the first electrical converter (22) and the second electrical converter (24) are electrically arranged in parallel between the input connection (26) and the output connection (28), wherein the second electrical converter (24) is configured for receiving the first DC bus voltage, for converting the first DC bus voltage into the second DC bus voltage and for providing the second DC bus voltage to the output connection (28);

a first auxiliary converter (30) electrically coupled in series between the first electrical converter (22) and the input connection (26) or between the first electrical converter (22) and the output connection (28), with the first auxiliary converter (30) being configured for adding a first compensation voltage to the first DC bus voltage applied to the first electrical converter (22) or, respectively, to a first output voltage generated by the first electrical converter (22), wherein the first compensation voltage is determined such that a first current through the first electrical converter (22) corresponds to a second current through the second electrical converter (24); and

a second auxiliary converter (32) electrically coupled in series between the second electrical converter (24) and the input connection (26) or between the second electrical converter (24) and the output connection (28), with the second auxiliary converter (32) being configured for adding a second compensation voltage to the first DC bus voltage applied to the second electrical converter (24) or, respectively, to a second output voltage generated by the second electrical converter (24), wherein the second compensation voltage is determined such that the first current through the first electrical converter (22) corresponds to the second current through the second electrical converter (24).

9. Converter arrangement (20) in accordance with claim 8, wherein

the first auxiliary converter (30) and the second auxiliary converter (32) are electrically coupled to each other by a balancer DC link (62) having a first balancer capacitor (64) and a second balancer capacitor (66) being electrically arranged in series and having a balancer midpoint (68) between the first balancer capacitor (64) and the second balancer capacitor (66).

10. Converter arrangement (20) in accordance with one of claims 8 or 9, comprising:
a balancer unit (34) electrically coupling the first auxiliary converter (30) and the second auxiliary converter (32) to each other, wherein the balancer unit (34) comprises the balancer DC link (62).

11. Converter arrangement (20) in accordance with claim 10, wherein

the first auxiliary converter (30) comprises a first converter DC link (42),
the second auxiliary converter (32) comprises a second converter DC link (52), and
the first and second converter DC links (42, 52) are electrically coupled to each other via the balancer DC link (62).

12. Computer program for operating a converter arrangement (20) according to one of claims 8 to 11, the computer program comprising computer-readable instructions which, when being executed by a processor of a controller according to claim 7, carry out the method in accordance with one of claims 1 to 6.

13. Computer-readable medium on which a computer program according to claim 12 is stored.

FIG. 1

EP 4 668 557 A1

EP 4 668 557 A1

**FIG. 2**

EUROPEAN SEARCH REPORT

Application Number

EP 24 18 2558

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2015/103564 A1 (DUAN FEI-YUE [CN] ET AL) 16 April 2015 (2015-04-16) * paragraph [0024] - paragraph [0038]; figure 4 * | 1-13 | INV. H02M1/00 H02M3/00 H02M3/28 H02M3/335 |
| A | LI FEI ET AL: "A Coupled-Inductor-Based Input-Parallel Output-Parallel Quasi-Resonant Single-Stage DC-DC Converter to Mitigate Current Discrepancy", 2023 11TH INTERNATIONAL CONFERENCE ON POWER ELECTRONICS AND ECCE ASIA (ICPE 2023 - ECCE ASIA), THE KOREAN INSTITUTE OF POWER ELECTRONICS, 22 May 2023 (2023-05-22), pages 2065-2071, XP034404064, DOI: 10.23919/ICPE2023-ECCEASIA54778.2023.10213887 [retrieved on 2023-08-23] * page 2066 - page 2068; figures 3, 4 * | 1-13 | |
| A | CN 114 744 879 A (HUNAN INST ENGINEERING) 12 July 2022 (2022-07-12) * and the corresponding parts of the description, concerning PWM DC-DC converter module 2; figure 1 * | 1-13 | TECHNICAL FIELDS SEARCHED (IPC) H02M |
| A | US 2020/204081 A1 (BACKMAN NILS [NO] ET AL) 25 June 2020 (2020-06-25) * paragraph [0081] - paragraph [0085]; figure 3 * | 1-13 | |

The present search report has been drawn up for all claims

| Place of search | Date of completion of the search | Examiner |
|---|---|---|
| Munich | 2 December 2024 | Kruip, Stephan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 18 2558

This annex lists the patent family members relating to the patent documents cited in the above-mentioned European search report.
The members are as contained in the European Patent Office EDP file on
The European Patent Office is in no way liable for these particulars which are merely given for the purpose of information.

02-12-2024

| Patent document cited in search report | | Publication date | Patent family member(s) | | Publication date |
|---|---|---|---|---|---|
| US 2015103564 | A1 | 16-04-2015 | CN | 104578791 A | 29-04-2015 |
| | | | TW | 201515388 A | 16-04-2015 |
| | | | US | 2015103564 A1 | 16-04-2015 |
| CN 114744879 | A | 12-07-2022 | NONE | | |
| US 2020204081 | A1 | 25-06-2020 | CN | 111416528 A | 14-07-2020 |
| | | | EP | 3672054 A1 | 24-06-2020 |
| | | | US | 2020204081 A1 | 25-06-2020 |

For more details about this annex : see Official Journal of the European Patent Office, No. 12/82